# EUROPEAN PATENT SPECIFICATION

(11) **EP 3 730 377 B1**
(45) Date of publication and mention of the grant of the patent: **01.02.2023**
(21) Application number: 18847150.2
(22) Date of filing: 19.12.2018
(51) Int. Cl.: B61D 47/00

(54) **EQUIPMENT AND METHOD FOR AUTONOMOUS TRANSFER OF A LOAD BETWEEN A LOAD TRANSFER RECEIVER AND A SUPPORT STRUCTURE**
VORRICHTUNG UND VERFAHREN ZUR SELBSTÄTIGEN VERLAGERUNG EINER LAST ZWISCHEN EINER STRUKTUR ZUR AUFNAHME DER LAST UND EINER STRUKTUR ZUR ABSTÜTZUNG DER LAST
ÉQUIPEMENT ET PROCÉDÉ POUR TRANSFERT AUTONOME DE CHARGE ENTRE RÉCEPTEUR DE RIPAGE ET STRUCTURE D'APPUI

(30) Priority: 19.12.2017 PT 2017110462
(43) Date of publication of application: 28.10.2020
(73) Proprietor: ALBUQUERQUE E PÓVOAS, António José, 1000-029 Lisboa (PT)
(72) Inventor: ALBUQUERQUE E PÓVOAS, António José, 1000-029 Lisboa (PT)
(74) Representative: Lourenço Martinho do Rosário, Ana Margarida
(86) International application number: PCT/IB2018/060380
(87) International publication number: WO 2019/123337

(56) References cited:
- EP-A1- 0 583 633
- WO-A1-94/15822
- WO-A1-2006/119955
- WO-A1-2007/051631
- WO-A1-2010/144033
- WO-A2-99/25582
- CH-A5- 629 446
- CN-A- 1 156 432
- DE-A1- 4 233 007
- FR-A- 1 285 500
- FR-A1- 2 737 690
- FR-A2- 2 028 701
- US-A- 2 996 206

## Description

### Scope of the Invention

The invention described in this document falls within the domain of port and railway transportation, more specifically on the field of transportation of passengers and freight, namely on the way to load/unload, organize and circulate trains for passengers and freight.

### Framework of the Invention

Railway is the land transportation method with the most capacity to transport freight and passengers. During the last years, the most developed countries have strongly invested in the development and implementation of High Speed Trains (HST) for passengers that aim to interconnect large cities inside one country and to provide fast connections with neighbouring countries, namely in Europe.

However, HST circulation requires specific rules for track design, alignment and safety, hardly achieved by the existing tracks. Such requires the construction of new infrastructures, which is extremely expensive and prolonged in time. Furthermore, old and new trains currently coexist on the same track, riding at different travelling speeds and with different control systems, namely in the case of obsolete freight trains.

The generalized increase of international traffic of containers has been overloading the existing railroads tracks, requiring more efficient logistic systems at the ports, and higher railway transportation capacity. These are usually done by increasing the frequency and speed of the trains, which cannot occur in some old tracks due to safety concerns.

However, other solutions have been developed. One such solution is now brought by this invention, which allows for HST and freight trains to be used in the same tracks through the use of new, fast, and "intelligent" self-transformable carriages that can carry freight and/or passengers according to traffic demand, capable of quickly changing payload and of travelling at high speeds in existing railroad infrastructure.

### Background of the Invention

There are several documents referring to systems to be used in railway transportation, namely systems for self-propelled platforms, as well as methods and equipment for lateral loading of railway cars.

Namely, document DE4114392 refers to a method and equipment for lateral loading of freight wagons.

Or document GB1166109 that refers a system of moving, storing and transferring containers.

Or the document GB2305645 that refers to a system for transferring railroad cars of people or goods between different transporting vehicles type.

Another kind of equipment, with lifting devices arranged along the track, is disclosed by document EP1879821.

However, documents referring to methods such as the ones of the present invention were not detected, being the few mentioned behind those that present technologies that can be used for the execution of the method disclosed in the present invention.

The previously mentioned systems differ from the system of the present invention, in that systems with self-transformable carriages are not considered, such as vehicles made of two chassis, both capable of travelling independently and capable of pairing and coupling to themselves, thereby forming a single wagon.

The upper chassis of the self-transformable carriages have their own capacity to circulate independently, being motorized and autonomous, or pushed or towed by a driving equipment.

The characteristics of the carriages as well as those required by infrastructures allowed the development of the methods of the present invention.

Moreover, none of the referred systems allows lateral shifting of the standard containers to the existing trains, autonomously and without adding other platforms on board, as the "Automated Guided Vehicles Side Sliding Loading system (AGV- SSL)" does.

### Advantages of the invention

To optimize railway transportation, it is indispensable to overcome some of the existing conditioning factors such as:
- Traffic overload of the existing infrastructures;
- Increase of freight transportation by railways;
- Long time required for the construction of new infrastructures;
- Existence of different gauges in neighbouring countries;
- High cost of new infrastructures sometimes underused;
- Inefficiency of the extraction of containers from ports by trains;
- Long immobilization time of the railway wagons in ports and logistic terminals for loading with containers:
- Need of increasing the parking areas for stowing freight containers in sea ports.

The method described in this invention brings a solution for most of the referred problems by implementing a method of using lower chassis with different upper chassis, with the latter sliding over the former, quickly changing the payload of the wagon either for passengers or freight.

This optimization is achieved by changing the train typology, introducing new infrastructures for loading/unloading the trains at ports and railroads, and by changing the operation mode of ports and railway stations.

Both the upper chassis and the lower chassis can move and circulate independently, bringing new methods for the use of railways.

The self-transformable carriages can use both existing and new infrastructures. For implementation of the chassis sharing method of the present invention, adapting existent railway stations and logistics terminals will be necessary.

### Brief description of the drawings

These and other features can be easily understood from the accompanying drawings, which should be considered as mere examples and not in any way restrictive of the scope of the invention. In the drawings and for illustrative purposes, the dimensions of some elements may be exaggerated and not drawn to scale. Absolute and relative dimensions may not correspond to the real ratios for carrying out the invention.

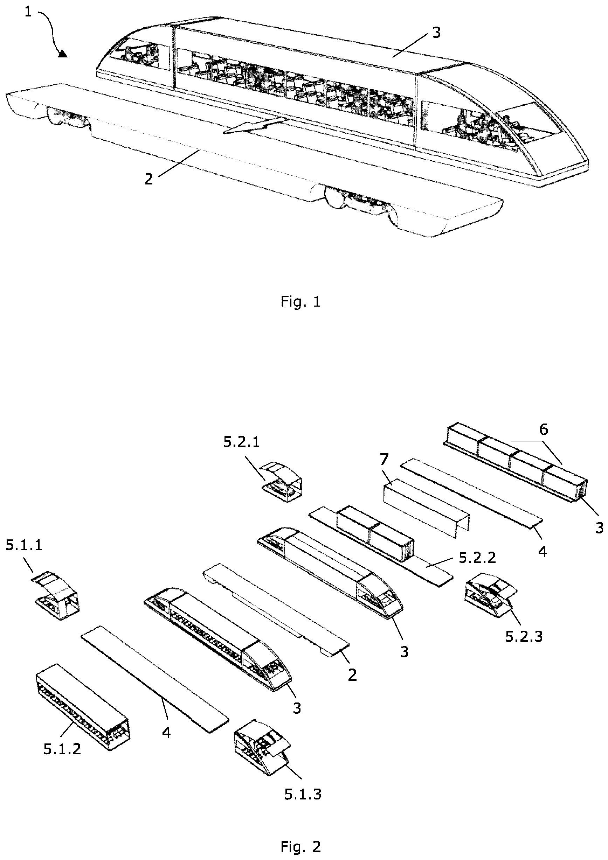

Figure 1 shows an exploded, perspective view of the system of the present invention. An intended effect of the system can also be observed: a mobile upper chassis (3) of a self-transformable carriage (1) can slide in the observed direction over a lower chassis (2) of the self-transformable carriage (1).
Figure 2 shows the lower chassis (2) and several combinations that represent different ways of assembling the mobile upper chassis (3). The mobile upper chassis (3) can be comprised of platforms (4) that carry containers (6) and/or cabins. The cabins (5) can be for passenger cabins (5.1) or freight cabins (5.2), and can be a frontal passenger cabin (5.1.1), a frontal freight cabin (5.2.1), a central passenger cabin (5.1.2), a central freight cabin (5.2.2), rear passenger cabin (5.1.3), or a rear freight cabin (5.2.3). Due to the modularity of the cabins and containers (6), it is possible to assemble any type of combination with these elements. Whenever necessary, a fairing (7) can be installed over the cabins or containers (6).

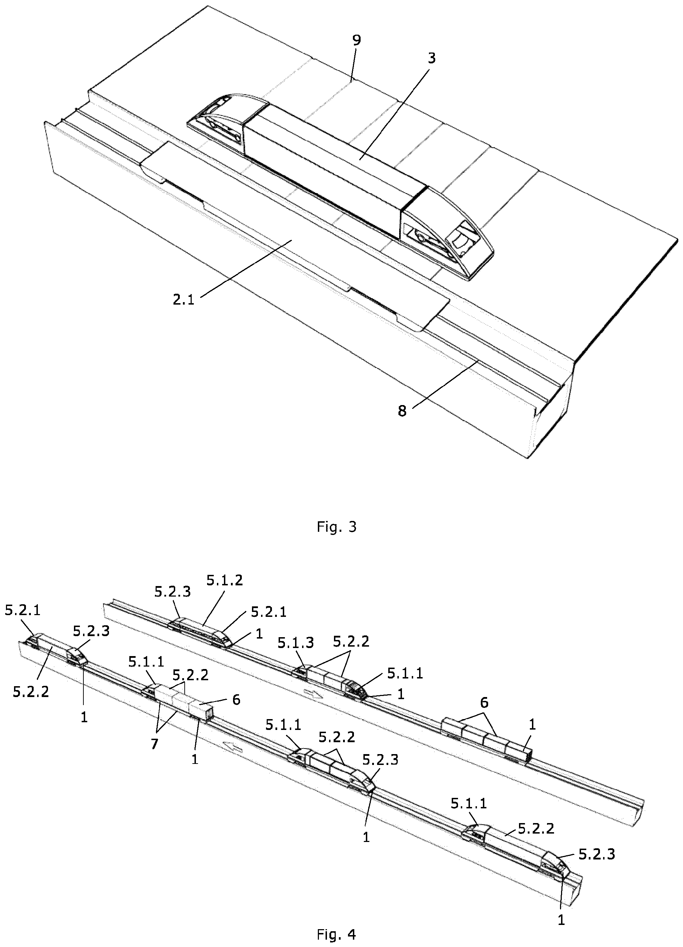

Figure 3 shows the sliding pier (9) with a mobile upper chassis (3) sliding towards a lower railway chassis (2.1) for circulation over a railroad (8).
Figure 4 shows several combinations of carriages (1) with passenger cabins (5.1) or freight cabins (5.2) and/or containers (6) that may be covered by fairings (7).

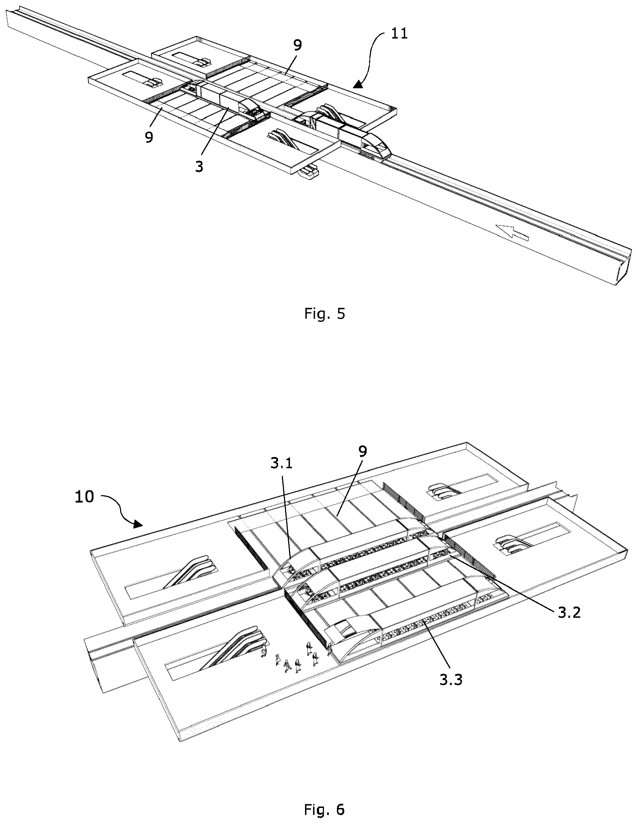

Figure 5 shows a freight station (11), wherein the mobile upper chassis (3) waits over the sliding pier (9) to slide over the lower chassis (2) and to start travel.
Figure 6 shows a passenger station (10) with sliding pier (9), wherein at least one upper chassis with passenger train cabins are parked and working as boarding room (3.3). When one carriage (1) reaches the station, an arriving mobile upper chassis being unloaded (3.1) is unloaded by sliding over the sliding pier (9), while a mobile upper chassis preparing to slide (3.2) prepares to slide over the arriving lower chassis (2) parked at the station, waiting to slide.

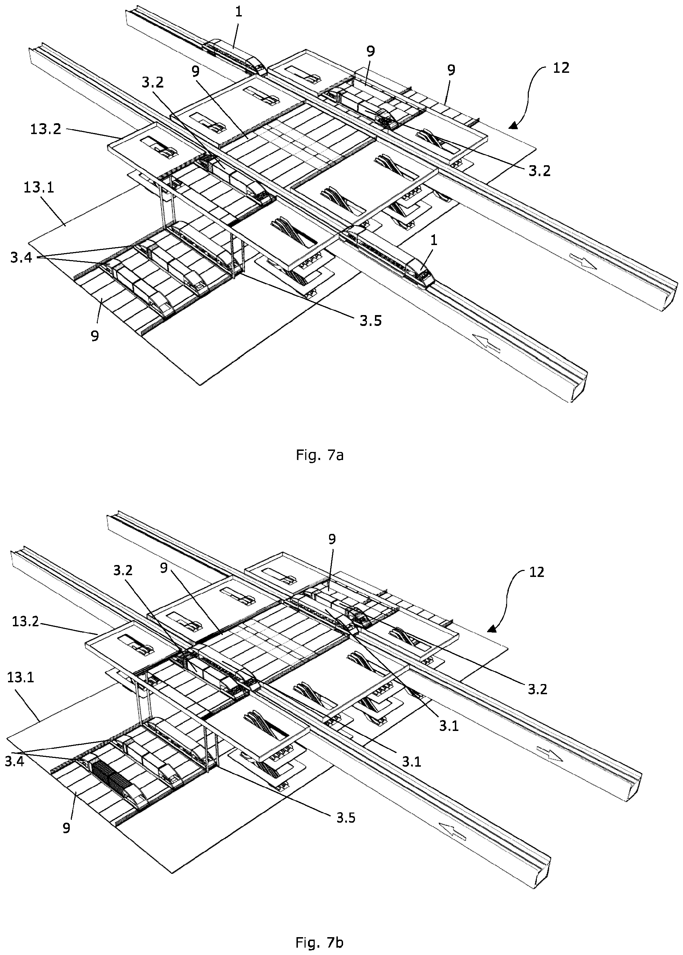

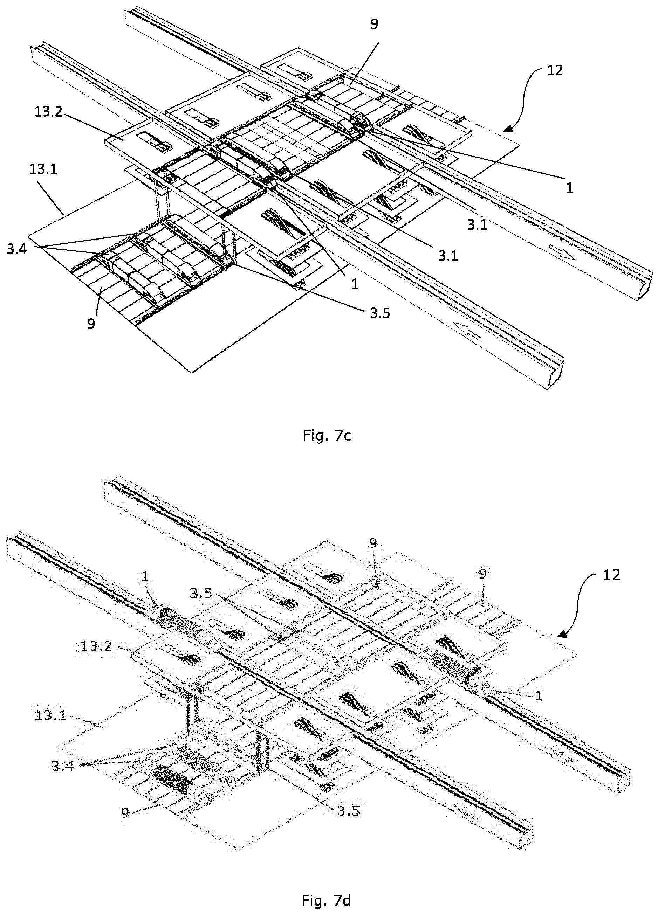

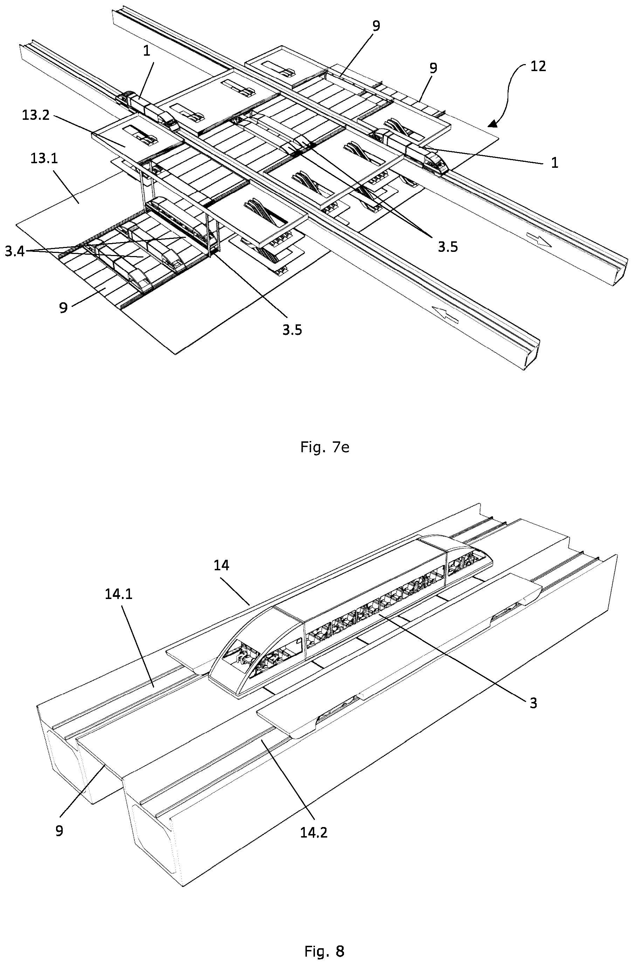

Figures 7a to 7e show a mixed station (12) for the loading and unloading of passengers and freight alike, wherein the preparation of mobile upper chassis being assembled (3.4) with passenger cabins (5.1) or freight cabins (5.2) is done at floors (13) of the mixed station (12), either at the same floor or at a lower floor (13.1), over sliding piers (9). Once organized, the mobile upper chassis being moved by elevator (3.5) goes up to the upper floor (13.2) through an elevator, according to the departure sequence and schedule of the station.
Figure 7a shows the arrival of two carriages (1) with passenger cabins (5.1) while two mobile upper chassis preparing to slide (3.2) with freight cabins (5.2) are waiting to depart, in sliding positions. The two carriages (1) arriving will then have the mobile upper chassis (3) unloaded onto the sliding piers (9).
Figure 7b shows the two arrived carriages (1) having the mobile upper chassis being unloaded (3.1), as well as the mobile upper chassis preparing to slide (3.2). The mobile upper chassis being unloaded (3.1) will be unloaded unto the sliding piers (9) and the mobile upper chassis preparing to slide (3.2) are in position to slide onto the lower chassis (2).
Figure 7c shows the mobile upper chassis being unloaded (3.1) of the arrived carriages (1) on the sliding pier (9) and the mobile upper chassis preparing to slide (3.2) on the lower chassis (2) that is ready to leave the station. Such change in positioning occurred through sliding of the mobile upper chassis being unloaded (3.1) and of the mobile upper chassis preparing to slide (3.2).
Figure 7d shows two new carriages (1) leaving the station, which carry the mobile upper chassis (3) that were preparing to slide, which have a new payload. The mobile upper chassis (3) that were being unloaded go down to a lower floor (13.1) using an elevator, while the next mobile upper chassis (3) to be loaded goes up to the upper floor (13.2) using another elevator.
Figure 7e shows the next mobile upper chassis (3) to be loaded already in sliding position.
Figure 8 shows a gauge changing platform (14) showing a sliding pier (9) and two lower chassis (2), one rolling over a first gauge (14.1) and the other rolling over a second gauge (14.2). A mobile upper chassis (3) is sliding over the sliding pier (9) from a lower chassis (2) rolling on the first gauge (14.1) to another lower chassis (2) rolling on the second gauge (14.2).

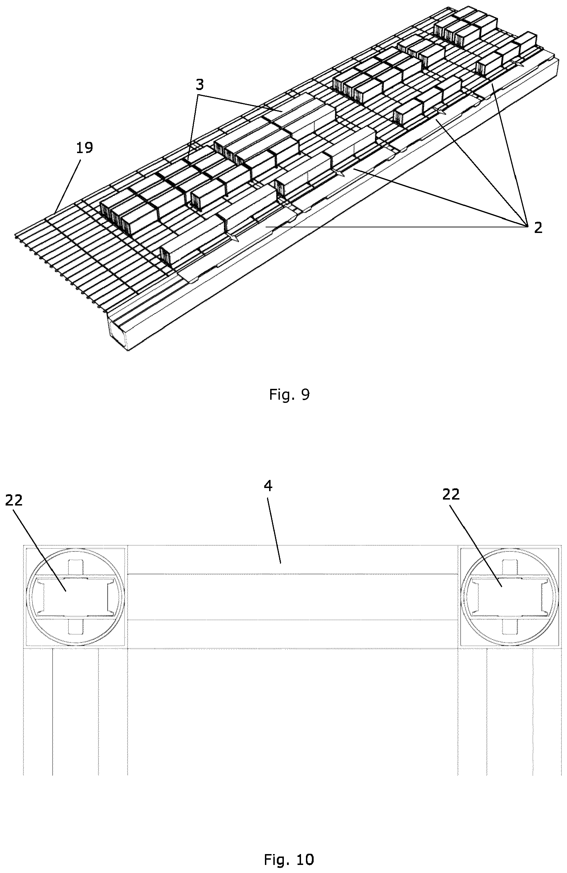

Figure 9 shows the mobile upper chassis (3) loaded with containers (6) moving autonomously and in a pre-organized way to the train loading zone (19), which will later slide over the lower chassis (2).
Figure 10 shows the disposition of multidirectional wheels (22) at the cross of the longitudinal beams with the transverse beams of a mobile upper chassis (3).

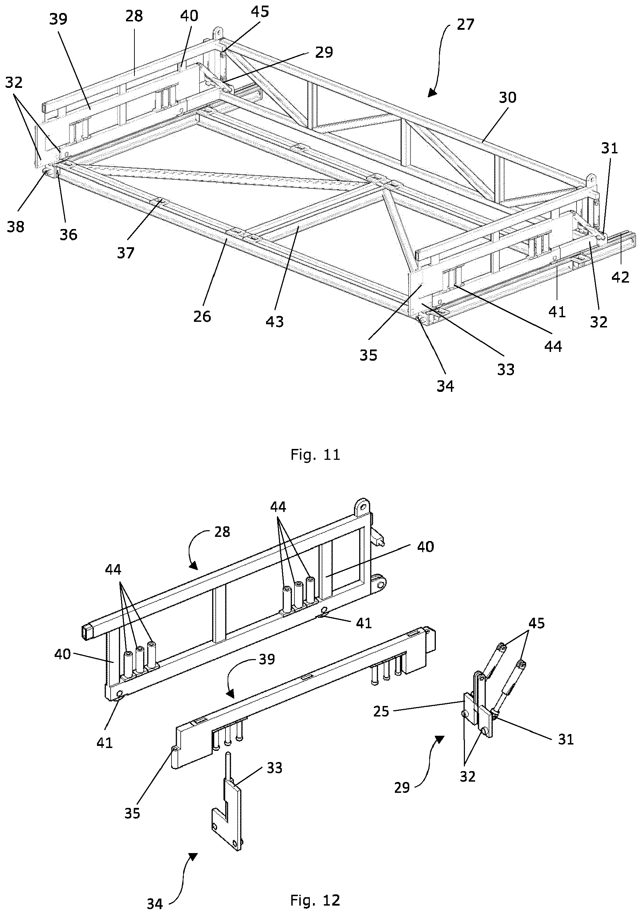

Figure 11 shows a withdrawable upper chassis (27) working over a multidirectional sliding platform (26), identifying the necessary components to perform the loading and unloading of the container autonomously.
Figure 12 shows a detail of the transfer system (28), of the front side connector (29), of the rear side connector (34) and of the lifting system (39).

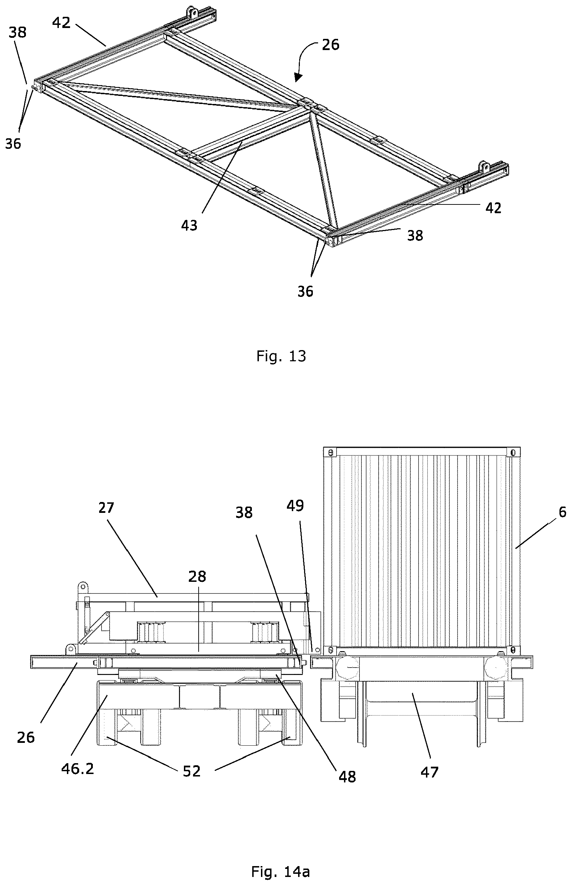

Figure 13 shows a detail of the multidirectional sliding platform (26) with the rails (42) where the withdrawable upper chassis (27) moves, the hydraulic cylinder (43) responsible for the platform transversal displacement and the optical sensors (36) inside the male docking pins (38).
Figure 14a shows the mobile supporting structure (46) or vehicle and the sliding receptor (47) being aligned.

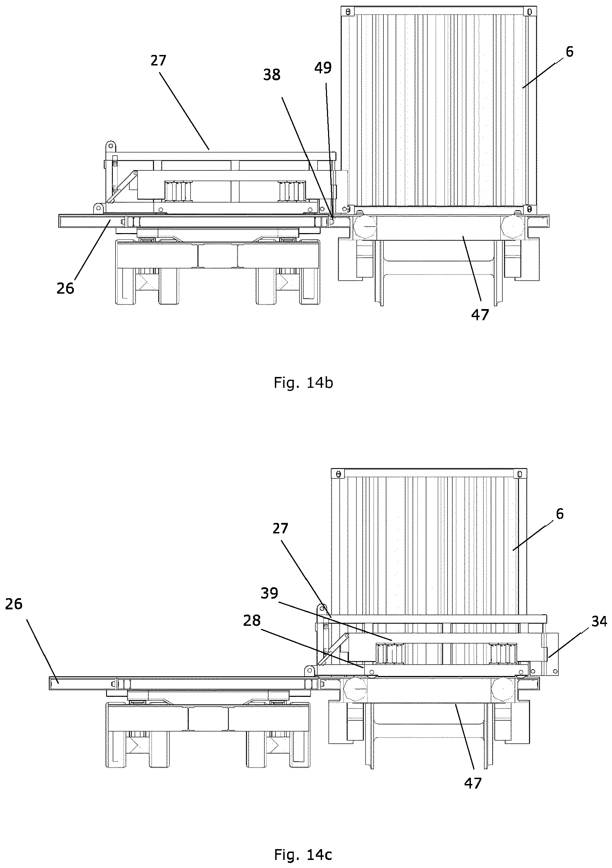

Figure 14b shows the multidirectional sliding platform (26) with male docking pins (38) inserted in the holes of the female docking plate (49) of the sliding receptor (47).
Figure 14c shows the withdrawable upper chassis (27) moving over the sliding receptor (47).

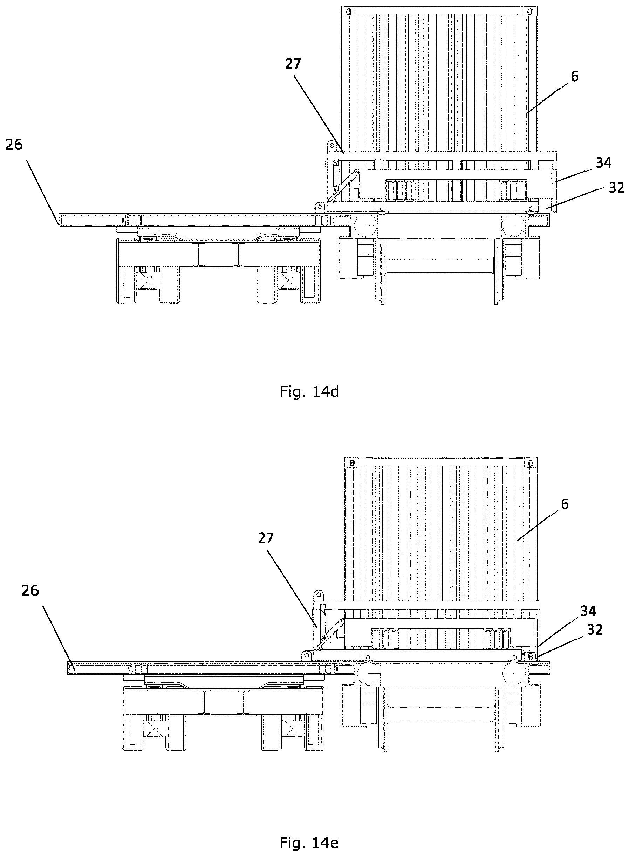

Figure 14d shows the rotational plate (33) of the rear side connector (34) turned 90° in order to become parallel to the lateral back side of the container (6).
Figure 14e shows the withdrawable upper chassis (27) going back until the connection pins (32) of the rear side connector (34) are inserted in the holes of the container corners on its lateral back side.

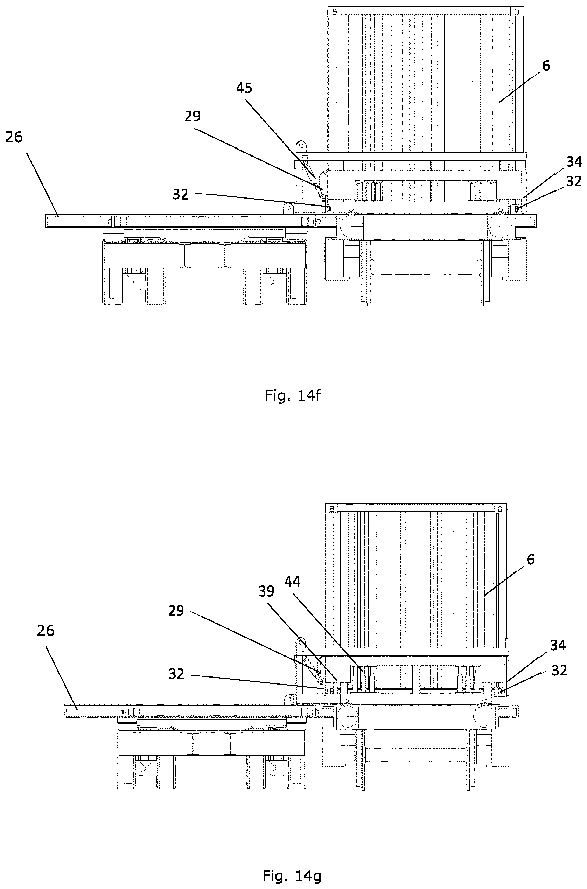

Figure 14f shows the group of front connection jacks (45) of the front side connector (29) moving the fork-shaped metal plate (25) from an inclined to a vertical position, inserting the connection pins (32) in the front side holes of the container corners.
Figure 14g shows the hydraulic jacks (44) of the lifting system (39) lift the container that stays suspended by the connection pins (32).

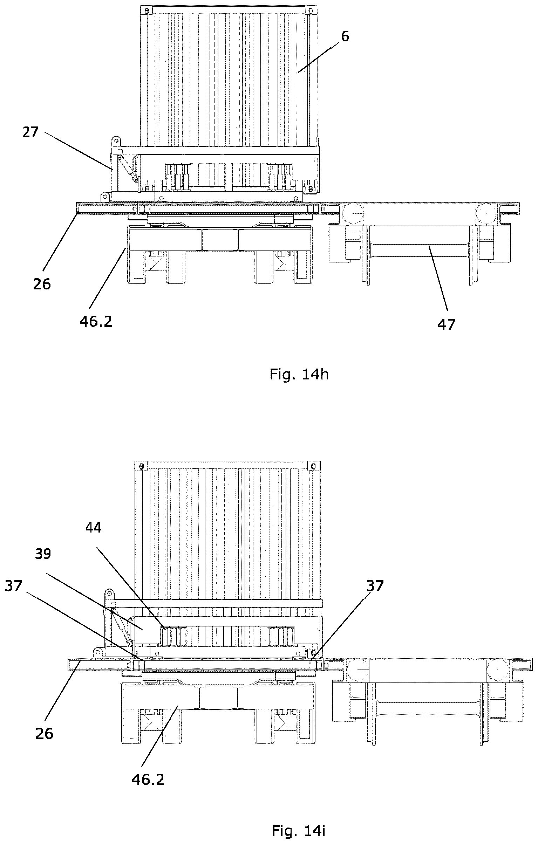

Figure 14h shows the sliding mechanism going backwards, bringing the container from the sliding receptor (47) to the multidirectional sliding platform (26).
Figure 14i shows the hydraulic jacks (44) of the lifting system (39) lower the container, inserting the vertical holes of the corners on the spikes (37) of the multidirectional sliding platform (26).

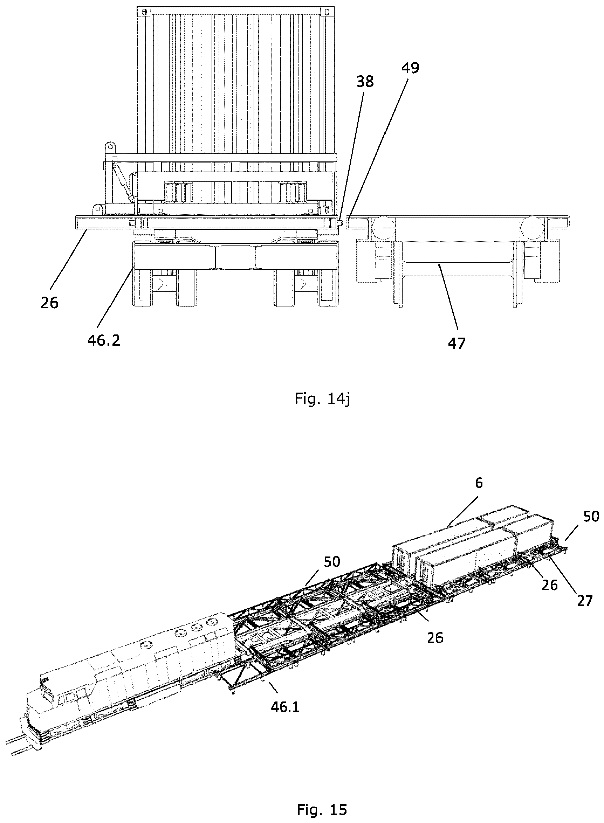

Figure 14j shows the multidirectional sliding platform (26) going back over the mobile (46.2) supporting structure or vehicle, disconnecting the male docking pins from the sliding receptor (47) ending the sliding process.
Figure 15 presents a fixed pier (50) made of fixed support structures (46.1) that support the multidirectional sliding platform (26) and the withdrawable upper chassis (27) that loads/unloads trains.

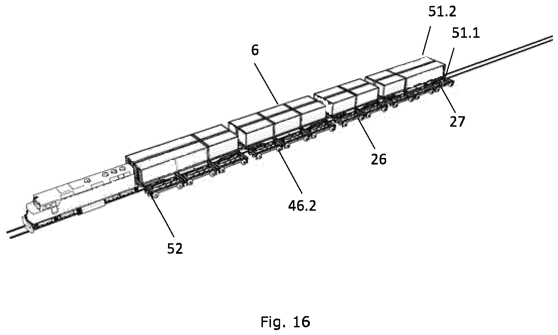

Figure 16 shows a mobile sliding pier (51.1) (51.2) which is composed of two groups of mobile support structures (46.2) wherein one group is comprised of unloaded mobile sliding piers (51.2) in one side of the railroad and another group is comprised of loaded mobile sliding piers (51.1) with containers (6) on the other side of the railroad. When the train arrives, the incoming containers (6) slide over the unloaded mobile sliding pier (51.2) while the outgoing containers slide from the loaded mobile sliding pier (51.1) over the freight wagons (47.1).

On the drawings it is possible to see the different components of the invention.
1. Carriage
2. Lower chassis
   2.1. Railway type lower chassis
   2.2. Tyre type lower chassis
3. Mobile upper chassis
   3.1. Being unloaded
   3.2. Preparing to slide
   3.3. Working as boarding room
   3.4. Being assembled
   3.5. Being moved by elevator
4. Platform
5. Cabin
   5.1. Passenger cabin
      5.1.1 Frontal passenger cabin
      5.1.2 Central passenger cabin
      5.1.3 Rear passenger cabin
   5.2. Freight cabin
      5.2.1. Frontal freight cabin
      5.2.2. Central freight cabin
      5.2.3. Rear freight cabin
6. Container
7. Fairing
8. Railroad
9. Sliding pier
10. Passengers station
11. Freight station
12. Mixed station
13. Station floor
   13.1. Lower floor
   13.2. Upper floor
14. Gauge changing platform
   14.1. First gauge
   14.2. Second gauge
19. Train loading zone
22. Multidirectional wheels
25. Fork-shaped metal plate
26. Multidirectional sliding platform
27. Withdrawable upper chassis
28. Transfer system
29. Front side connector
30. Arm frame
31. Rotation axle
32. Connection pins
33. Rotational plate
34. Rear side connector
35. Hinge plate
36. Optical sensors
37. Retractable spikes
38. Male docking pins
39. Lifting system
40. Sliding frame
41. Wheels
42. Rail
43. Rack
44. Hydraulic jacks
45. Front connection jacks
46. Supporting structure
   46.1. Fixed supporting structure
   46.2. Mobile supporting structure
47. Sliding receptor
48. Multidirectional sliding supports
49. Female docking plate
50. Fixed pier
51. Mobile sliding pier
   51.1. Loaded mobile sliding pier
   51.2. Unloaded mobile sliding pier
52. Vertical stabilization jacks

### Detailed description of the Invention

The present invention refers to a new method for using new types of railway carriages named as "Self-transformable carriages" which are vehicles composed by one lower chassis (2) that rolls over the railway, and one mobile upper chassis (3) that can move independently outside of the railway track and can install itself over the lower chassis (2) creating a single vehicle.

The invention consists in the equipment and in a method necessary for using self-transformable carriages (1), as well as using fixed or mobile structures capable of sliding and moving mobile upper chassis (3) over the lower chassis (2) at train stations or logistics and port terminals, and includes:
- Method for sharing chassis
- Method for changing from one gauge to another
- Method of mobile stowage at the ports.

The invention is based on the use of self-transformable carriages (1) in combination with one of the above referred methods.

### Self-transformable carriages

The self-transformable carriages (1) are composed of two elements, one lower chassis (2) that rolls over the railway and a mobile upper chassis (3) that transports passengers and/or freight.

By controlling the distance and the relative speed, several self-transformable carriages (1) can circulate with independent destinations on the same line, queued, one after the other, with a safety distance between them, calculated in function of the speed and characteristics of the track.

The railway circulation can be done in queue by the main tracks, using deviations for the passenger stations (10) and freight stations (11), similar to the deviations for service areas in highways.

The mechanical method to couple the lower chassis (2) to the mobile upper chassis (3) is hydraulic or magnetic, or any other type as long as it allows blocking the chassis between themselves. On special or emergency situations, all carriages (1) can be manually operated or towed.

### Lower chassis

There are two types of lower chassis (2):
- Autonomous and motorized;
- Towed or pushed.

The lower chassis (2) can be of a railway type (2.1) or of a tyre type (2.2) and can be motorized, autonomous or remote controlled, towed or pushed.

The lower chassis (2) can be equipped with mechanisms that allow loading or unloading transversally the mobile upper chassis (3) which is already coupled or about to be coupled. This system also allows the unloading of one mobile upper chassis (3) to one side, simultaneously with the loading of another mobile upper chassis (3) by the other side.

The lower chassis (2) is equipped with vertical jacks that allow the vertical levelling, and guiding laser systems for its longitudinal positioning, allowing a correct alignment with the mobile upper chassis (3). The four vertical hydraulic jacks (44) also stabilize the lower chassis (2) guaranteeing its horizontality during the sliding operation.

The lower chassis (2) has its own means for making its longitudinal immobilization with high precision at any loading pier.

The motorization of tyre type (2.2) lower chassis (2) is made by any type of engine, namely electric or combustion engines.

### Mobile upper chassis

The mobile upper chassis (3) are built in two types:
- Motorized and autonomous,
- Non-motorized, being towed or pushed by external machinery that are coupled to these chassis by mechanical connections.

The mobile upper chassis (3) are composed of sets made of platforms (4) that carry containers (6) and/or cabins (5). The cabins (5) can be for passenger cabins (5.1) or freight cabins (5.2). These can be frontal passenger cabins (5.1.1), frontal freight cabins (5.2.1), central passenger cabins (5.1.2), central freight cabins, (5.2.2), rear passenger cabins (5.1.3), or rear freight cabins (5.2.3). Due to the modularity of the cabins (5) and of the containers (6), it is possible to arrange any type of combination with these elements. In case it becomes necessary, fairings (7) can be placed over the cabins (5) or over the containers (6). The frontal passenger cabins (5.1.1), frontal freight cabins (5.2.1), rear passenger cabins (5.1.3) and rear freight cabins (5.2.3) maybe identical and symmetrical, enabling its use at any end of the composition, and in any direction of the movement.

All types of mobile upper chassis (3) can move transversally, longitudinally or in both directions above the sliding piers (9), prepared for this purpose, namely but not exclusively by rails (42) or magnetic bands, allowing its exchange and organization over an horizontal floor.

The mobile upper chassis (3) can be autonomous, motorized and remote controlled or circulate with the help of other motorized equipment allowing for load carrying independently of the lower chassis (2).

The cabins (5) which are parts of the mobile upper chassis (3) are designed according to its use, namely:
- Passengers
- Ambulance/hospital
- Post
- Sea containers
- Refrigerated containers
- Aeronautic containers
- Freight in small containers
- Car transportation or other vehicles.

The mobile upper chassis (3) is composed of metallic platforms (4) made of longitudinal beams and transversal beams where the movement devices are installed.

The mobile upper chassis (3) can move over rails (42), orthogonally, following the two horizontal directions, or over flat surfaces flowing any direction.

The mobile upper chassis (3) is equipped with multidirectional wheels (22) that are assembled at the intersection of the longitudinal beams with the transversal beams, originating mobile upper chassis (3) with multidirectional wheels (22).

The rotation axle is placed inside the mobile upper chassis (3) at the intersection of longitudinal and transversal beams, being the rotation of the wheels (41) either free or commanded by a hydraulic system. In addition, a vertical jack placed in each wheel (41) extends the wheels (41), placing them in service mode, or retracts them, immobilizing the mobile upper chassis (3).

The mobile upper chassis (3) has a longitudinal length adequate to the task it is designed for.

When transporting containers (6), special devices such as vertical spikes or end stoppers are installed over the transversal beams. Those devices can be operated automatically or manually allowing docking and fixing the containers (6) to the mobile upper chassis (3).

When transporting the cabins (5), the docking is done using vertical spikes, blocking the displacement of the mobile upper chassis (3) in any direction and in any situation.

In the case that the mobile upper chassis (3) is motorized, the sliding movement is done by its own movement equipment.

### Sliding

The sliding of the mobile upper chassis (3) can be lateral-SSL (Side Sliding Loading) or longitudinal - LSL (Longitudinal Sliding Loading) and can be performed using the sliding pier (9), which has installed the necessary equipment to displace the mobile upper chassis (3).

The mechanical methods for sliding the mobile upper chassis (3) are namely but not exclusively, hydraulic or magnetic, helped whenever necessary by positional control systems, namely but not exclusively by laser or magnetic band.

The sliding pier (9) is a structure built to allow the loading of the mobile upper chassis (3) over the lower chassis (2).

Considering the objective of using the self-transformable carriages (1) in different types of tracks and stations, such as passenger stations (10) and freight stations (11), namely existing ones, there are several configurations for integrating the sliding mechanical systems to load the mobile upper chassis (3):
- Sliding mechanical systems integrated in the lower chassis (2),
- Sliding mechanical systems integrated in the mobile upper chassis (3),
- Sliding mechanical systems integrated in the sliding pier (9),
- Sliding mechanical systems combined between the lower chassis (2) and the upper chassis (3).

A specific software is used to make the conjugation of the movements of the lower chassis (2) and those of the mobile upper chassis (3) which are loaded over them.

### Sharing chassis method

The sharing chassis method is based on changing the operation mode of the railway tracks achieved with self-transformable carriages (1) and sliding piers (9), allowing the exchange, loading and unloading of mobile upper chassis (3) over the lower chassis (2) assembling self-transformable carriages (1). The sharing occurs for carriages (1) designed to transport passengers, freight or mixed configurations with passengers and freight.

This solution allows the automatic configuration of each carriage (1) at the sliding pier (9) according to the existing demand for passengers or freight transportation, in real time.

The sharing method allows that the mobile upper chassis (3) to circulate in any type of track, conventional or high speed, as at the sliding piers (9) can be coupled with lower chassis (2) that respect the requests of monitoring and safety standards of any type of track.

### Passenger stations

The passenger stations (10) allow the operation of lower chassis (2) designed to operate with mobile upper chassis (3) comprised of passenger cabins (5.1). These mobile upper chassis (3) can serve as boarding rooms, as observed in figure 6 with mobile upper chassis working as a boarding room (3.3), allowing passengers to access the passenger cabins (5.1) as soon as they arrive to the station, to start work or rest.

In this situation, when the lower chassis (2) arrives, the mobile upper chassis (3) are already prepared to slide over the lower chassis (2).

Normally the loading of new mobile upper chassis (3) comprised of passenger cabins (5.1) is preceded of the unloading of other mobile upper chassis (3) to the opposite side.

### Freight stations

The freight stations (11) allow the operation of lower chassis (2) loaded with containers (6) and/or freight cabins (5.2).

The freight stations (11) have exactly the same operation method as the one presented before for passenger stations (10) having next to them a parking and preparation zone (for freight cabins or containers) where the payload is organized by the entrance order over the lower chassis (2).

### Combined or mixed stations

At the combined or mixed stations (12) it is possible to load mobile upper chassis (3) with freight cabins (5.2), passenger cabins (5.1), and/or containers (6).

As the mobile upper chassis (3) have their own translation means, it is possible to organize them following their entrance order in the main track before they are led to the pier.

With the progressive start of operation of the self-transformable carriages (1) the tendency is that the new stations are combined or mixed stations (12), as they allow a better optimization of the utilization of the track, due to the facility that they provide inserting freight cabins (5.2) between passenger cabins (5.2), eliminating wasted time.

### Changing track gauge method

The existing methods for changing railway cabins (5) from a track with one gauge to another track with a different gauge are:
- variable gauge axles - the vehicles can change the width between wheels
- changing the axles of all carriages at special pavilions

The changing track gauge method with side sliding method is obtained by sliding the mobile upper chassis (3) from one lower chassis (2) that runs on a track with a first gauge (14.1), to another lower chassis (2) that runs on a track with a second gauge (14.2).

This operation will preferably be done by sliding the mobile upper chassis (3) from the lower chassis (2) that runs on a track with a first gauge (14.1) to a gauge changing platform (14), and later sliding this mobile upper chassis (3) from that changing gauge pier to another lower chassis (2) running over a second gauge (14.2).

This method is much cheaper and practical than those existing nowadays.

### Mobile stowage in ports

With this new side sling system and its equipment brings a new way of stowing containers (6) in ports. The AGV-SSL vehicles allow an organization of containers over buffer fixed structures were AGV-SSL can deposit and pick up the containers (6) whenever they have to leave the port.

### The equipment

The withdrawable upper chassis (27) is a system that allows loading and unloading railway wagons or other vehicles in an autonomous, simultaneous and remote controlled way.

The withdrawable upper chassis (27) is placed over the multidirectional sliding platform (26) and has the triple function of connecting, lifting and transferring the containers (6), being equipped with arm frames (30), sliding frame (40), transfer system (28) and lifting system (39).

The withdrawable upper chassis (27) with anywhere between two and five arm frames (30) embraces the containers (6), one by one, two by two, three by three or four by four, being able of lifting or lowering the pack of containers (6) and displace them transversally between the withdrawable upper chassis (27) base and the sliding receptor (47), that can be, namely but not exclusively a railway wagon, a semi-trailer, a fixed structure, or any other type of sliding receptor (47). This withdrawable upper chassis (27) and the multidirectional sliding platform (26) are installed over a supporting structure (46), which can be an autonomous or towed vehicle or an easel, depending on the functionality it is destined to have.

### Transfer system

The transfer system (28) is made with a rigid frame steel structure inside of which there is a sliding frame (40) where the lifting system (39) travels.

This systems allows to transfer containers (6) transversally with the movement done preferably with wheels (41), built in the transfer system (28) that roll over rails installed over the multidirectional sliding platform (26) and over the sliding receptor (47). This movement can also be done installing a ski under the transfer system (28) and rollers placed over the multidirectional sliding platform (26) and over the sliding receptor (47).

For this movement, the use of hydraulic cylinders installed between the multidirectional sliding platform (26) and the withdrawable upper chassis (27) is preferred, pushing it to the sliding receptor (47) and vice versa. Another way foreseen is the use of a gear wheel electric engine running over a rack (43) that will pull the transfer system (28).

### Lifting system

The lifting system (39) is a steel frame guided by vertical sliding frames (40) and moved vertically relatively to the transfer system (28) by means of groups of hydraulic jacks (44). This frame holds front side connectors (29) and rear side connectors (34) that lift and hold the containers (6).

### Front side connector and rear side connector

There are two types of connector systems: the front side connector (29) and the rear side connector (34) that both have connection pins (32) that are inserted in the side holes of the normalized corners of the containers (6).

The connection pins (32) have the necessary dimensions to be laterally inserted in the corner holes without letting the containers (6) fall down, and without colliding with twist-locks or spikes (37) that may be also vertically inserted in the corner holes.

The front side connector (29) comprises a group of bi-articulated jacks and a fork-shaped metal plate (25) whose slot fits on the transfer system (28). The fork-shaped metal plate (25) has two connection pins (32) to connect the containers (6) and has articulated connections at one end to the lifting system (39) and at the other end to a group of front connection jacks (45). These connection jacks (45) have another articulated connection to the transfer system (28). This way when the lifting system (39) goes up the fork-shaped metal plate (25) goes from an inclined-resting position to a vertical-forced position, pushing the plate against the container (6) against the rear side connector (34). This way the connection pins (32) cannot detach from the container (6) corner holes.

The rear side connector (34) is made by two parts, one hinge plate (35) and one rotational plate (33) that can rotate 90° between them. In the resting position, in which the hinge plate (35) and the rotational plate (33) are substantially coplanar, the two plates (35) (33) are juxtaposed, in a way the pair does not exceed 60 mm thickness, allowing the arms of the withdrawable upper chassis (27) to move between containers (6) which should be placed over the railway wagons at the normalized distance of 74 mm between them, as it occurs in railway wagons.

In the rotated position, in which the hinge plate (35) and the rotational plate (33) are substantially perpendicular, the rotational plate (33), that has two connection pins (32), stays parallel to the side of the container (6) enabling their insertion in the holes of the corners of the containers (6).

The arms of the withdrawable upper chassis (27) of the pack of containers (6) are braced together by steel arm frames (30) parallel to the sidewall of the containers (6) that guarantees the synchronism of the movement of the arms and consequently the adequate sliding of the containers (6).

### Multidirectional sliding platform

The braced arms of the withdrawable upper chassis (27) slide over a multidirectional sliding platform (26) which is made with steel beams. The base of the multidirectional sliding platform (26) is connected to the supporting structure (46) by a system of multidirectional sliding supports (48) that allow a fine multidirectional adjustment at the horizontal level of the withdrawable upper chassis (27) relatively to the sliding receptor (47).

The multidirectional sliding platform (26) is equipped with male docking pins (38) that allow coupling between the multidirectional sliding platform (26) and the sliding receptor where female docking plates (49) are installed for the sliding process. Inside the male docking pins (38) laser guidance systems are installed to allow automatic docking between the multidirectional sliding platform (26) and the sliding receptor (47).

### Supporting structures

The supporting structure (46) can be a fixed supporting structure (46.1) or mobile supporting structure (46.2).

The fixed support structure (46.1) can be made of concrete or steel and are used to support the multidirectional sliding platform (26) that in this situation also have lifting systems integrated so that they can level themselves with the sliding receptor (47).

The mobile support structure (46.2) can be autonomous or towed, over tyres, steel wheels or caterpillars, and they have vertical stabilization jacks (52) installed, as well as a multidirectional sliding platform (26) to allow their positioning on the 3 directions of space relatively to the sliding receptor (47) and to stabilize the two during the sliding process of the withdrawable upper chassis (27).

### Fixed piers

The fixed piers (50) are composed of fixed support structures (46.1) that support multidirectional sliding platform (26) and modular withdrawable upper chassis (27), installed parallel to rail tracks, at one or both sides of the track, which allows loading and unloading of railway trains in an autonomous and synchronized way. In this case the multidirectional sliding platform (26) have longitudinal jacks with longer rods to allow its longitudinal positioning with the several types of existing wagon sliding receptors (47).

### Mobile piers

Mobile sliding piers (51) are composed of several mobile support structures (46.2) above which the multidirectional sliding platform (26) and the withdrawable upper chassis (27) are installed to adapt their geometric characteristics to the coming train or any other type of wagon sliding receptor (47). Mobile sliding piers (51) can be either loaded mobile sliding piers (51.1) or unloaded mobile sliding piers (51.2)

In order to match the different typologies of existing railway wagons, autonomous or towed vehicles of several lengths will be used so that there is a correspondence with the wagons they will be associated with.

The mobile sliding piers (51) can change their location, anytime, at the port or at a terminal, clearing the place from any infrastructure that might compromise future layouts of the port or terminal.

With this solution as soon as the train is unloaded, the mobile pier vehicles disassociate and transport immediately their loads to any other zone of the park or terminal.

The withdrawable upper chassis (27) associated with fixed piers (50) and mobile sliding piers (51) is an innovation at the railways sector that eases the transfer of payload between passenger and freight trains that circulate in parallel lines.

This innovative system has immediate use changing gauge stations that can be installed at border stations or terminals. It also allows the transfer of cabins (4) between urban and sub-urban trains.

In the particular case of containers (6) it allows to load trains with different lengths and number of wagons in the same time.

Either in the case of fixed piers (50) case or mobile sliding piers (51), a certain series of movements is necessary to perform the sliding process:
a) The multidirectional sliding supports (48) move the multidirectional sliding platform (26) in order to adjust the position of the withdrawable upper chassis (27) arms with the wagon sliding receptor (47) or any other type of sliding receptor (47);
b) The multidirectional sliding platform (26) travels in the transversal direction in a way the male docking pins (38) of the multidirectional sliding platform (26) are inserted in the female docking plates (49) of the railway wagon;
c) The withdrawable upper chassis (27) arms goes to the sliding receptor (47) leaving the transfer system (28) and lifting system (39) parallel to the smaller sides of the containers (6);
d) The rear side connector (34) rotates 90° leaving the rotational plate (33) parallel to the side of the container (6);
e) The withdrawable upper chassis (27) goes back until the connection pins (32) of the rear side connector (34) are inserted in the corner holes of the container (6) back side;
f) The front connection jacks (45) of the front side connector (29) is activated in order to move the fork-shaped metal plate (25) form the inclined position the vertical position, inserting the connection pins (32) in the corner holes of the container (6) front side;
g) The hydraulic jacks (44) of the lifting system (39) are operated suspending the container (6) by the connection pins (32) of the front side connectors (29) and rear side connector (34);
h) The withdrawable upper chassis (27) goes back bringing the container (6) from the wagon sliding receptor (47) over the multidirectional sliding platform (26);
i) By closing the hydraulic jacks (44) of the lifting system (39) the container (6) is lowered inserting the spikes (37) of the multidirectional sliding platform (26);
j) The multidirectional sliding platform (26) is moved backwards so that the male docking connectors (38) are released from female docking plate (49) the sliding receptor (47).

## Claims

1. Equipment to transfer load between a sliding receptor (47) and a supporting structure (46) comprising a withdrawable upper chassis (27) comprising:
- means for load lifting and lateral moving, the load being a container, the load lifting means consisting in a lifting system (39) comprising front side connectors (29) and rear side connectors (34), both comprising connection pins (32) intended for connection with the corners of a container (6);
- the lateral moving means consisting in a transfer system (28); and
- a laser system for position identification of the withdrawable upper chassis (27);
wherein:
- the transfer system (28) comprises:
- a rigid frame steel structure comprising vertical sliding frames (40);
- groups of hydraulic jacks (44) placed within the rigid frame steel structure configured to lift the lifting system (39); and
- wheels (41) used as sliding means to slide the transfer system (28) to the sliding receptor (47) in a direction transversal to the direction of the container (6);
- the lifting system (39):
- is a steel frame mounted on the sliding frame (40) and is configured to travel vertically along the sliding frame (40) by means of the groups of hydraulic jacks (44);
- the rear side connectors (34) are mounted with a vertical shaft on a hinge plate (35) and comprise a rotational plate (33) configured to rotate up to 90° horizontally relative to the hinge plate (35), thereby enabling connection of the rear side connectors (34) to the container (6) via the connection pins (32); and
- the front side connectors (29) comprise a fork-shaped metal plate (25) which has two articulated connections at each end connected to the lifting system (39) and is configured to rotate from an inclined outward position to a vertical position by means of the connection jacks (45), thereby enabling connection to the container (6) via the connection pins (32).

2. Equipment according to the preceding claims, wherein the fork shaped metal plate (25) of the front side connectors (29) are fitted to the transfer system (28) via a slot.

3. Equipment according to the preceding claim, wherein in the resting position, the hinge plate (35) and the rotational plate (33) are juxtaposed in such a way that the withdrawable upper chassis (27) can be moved between the containers (6).

4. Equipment according to any of the preceding claims, wherein in the rotated position, the rotational plate (33) where two connection pins (32) are placed stays parallel to the container (6) side wall and locked in this position and/or wherein the arms of the withdrawable upper chassis (27) dedicated to the same container are blocked by a braced steel arm frame (30) parallel to the sidewall of the containers (6) to guarantee the synchronism of their movement and proper side sliding containers (6).

5. Equipment according to any of the preceding claims, wherein the arms of the withdrawable upper chassis (27) slides over a multidirectional sliding platform (26) which is connected to the supporting structure (46) by a multidirectional slider support (48), for a fine multidirectional adjustment at the horizontal level of the withdrawable upper chassis (27) relatively to the sliding receptor (47).

6. Equipment according to the preceding claim, wherein the sliding receptor (47) has a female docking plate (49).

7. Equipment according to any of the preceding claims, wherein male docking pins (38) are arranged in the multidirectional sliding platform (26) for the correct coupling and support between the supporting structure (46) and the sliding receptor (47).

8. Equipment according to the preceding claim, wherein in the male docking pins (38) laser guidance systems are arranged for automatic docking the multidirectional sliding platform (26) relatively to the sliding receptor (47).

9. Method for using the equipment claimed in the previous claims, **characterized in that** it comprises the following steps:
a) The multidirectional slider supports (48) move the multidirectional sliding platform (26) in order to adjust the position of the withdrawable upper chassis (27) arms with the sliding receptor (47);
b) The multidirectional sliding platform (26) travels in the transversal direction in a way the male docking pins (38) of the multidirectional sliding platform (26) are inserted in the female docking plates (49) of the railway wagon;
c) The withdrawable upper chassis (27) arms goes to the sliding receptor (47) leaving the transfer system (28) and lifting system (39) parallel to the smaller sides of the containers (6);
d) The rear side connector (34) rotates 90° leaving the rotational plate (33) parallel to the side of the container (6);
e) The withdrawable upper chassis (27) goes back until the connection pins (32) of the rear side connector (34) are inserted in the corner holes of the container (6) back side;
f) The front connection jacks (45) of the front side connector (29) is activated in order to move the fork-shaped metal plate (25) form the inclined position the vertical position, inserting the connection pins (32) in the corner holes of the container (6) front side;
g) The hydraulic jacks (44) of the lifting system (39) are operated suspending the container (6) by the connection pins (32) of the front side connectors (29) and rear side connector (34);
h) The withdrawable upper chassis (27) goes back bringing the container (6) from the sliding receptor (47) over the multidirectional sliding platform (26);
i) By closing the hydraulic jacks (44) of the lifting system (39) the container (6) is lowered inserting the spikes (37) of the multidirectional sliding platform (26);
j) The multidirectional sliding platform (26) is moved backwards so that the male docking connectors (38) are released from female docking plate (49) the sliding receptor (47), finishing the side sliding process.

## Patentansprüche

1. Vorrichtung zum Lastentransfer zwischen einem Gleitaufnehmer (47) und einer Tragstruktur (46), umfassend ein ausziehbares oberes Chassis (27), umfassend:
- Mittel zum Heben und seitlichen Bewegen von Lasten, wobei die Last ein Container ist, wobei die Lasthebemittel aus einem Hebesystem (39) bestehen, das vordere (29) und hintere Verbinder (34) umfasst, die beide Verbindungsstifte (32) umfassen, die zur Verbindung mit den Ecken eines Containers (6) bestimmt sind;
- wobei das seitliche Bewegungsmittel aus einem Transfersystem (28); und
- einem Lasersystem zur Positionsbestimmung des ausziehbaren oberen Chassis (27) besteht;
wobei:
- das Transfersystem (28) umfasst:
- eine starre Stahlrahmenkonstruktion mit vertikalen Gleitrahmen (40); und
- Gruppen von hydraulischen Hebern (44), die innerhalb der starren Stahlrahmenstruktur angeordnet sind, konfiguriert, um das Hebesystem (39) anzuheben und
- Räder (41) umfasst, die als Gleitelemente dienen, um das Transfersystem (28) in einer Richtung quer zur Richtung des Containers (6) auf die Gleitaufnahme (47) zu verschieben;
- das Hebesystem (39):
- ein Stahlrahmen ist, der auf dem Gleitrahmen (40) montiert und so konfiguriert ist, dass er mithilfe der Gruppen von hydraulischen Hebern (44) vertikal entlang des Gleitrahmens (40) bewegt werden kann;
- die hinteren Verbinder (34) mit einer vertikalen Welle an einer Scharnierplatte (35) angebracht sind und eine Drehplatte (33) umfassen, die so konfiguriert ist, dass sie sich um bis zu 90° horizontal relativ zu der Scharnierplatte (35) drehen kann, wodurch die Verbindung der hinteren Verbinder (34) mit dem Container (6) über die Verbindungsstifte (32) ermöglicht wird; und
- die vorderen Verbinder (29) eine gabelförmige Metallplatte (25) umfassen, die zwei Gelenkverbindungen an jedem Ende aufweist, die mit dem Hebesystem (39) verbunden sind, und die so konfiguriert ist, dass sie mittels der Verbindungsheber (45) von einer nach außen geneigten Position in eine vertikale Position gedreht werden kann, wodurch eine Verbindung mit dem Container (6) über die Verbindungsstifte (32) ermöglicht wird.

2. Vorrichtung nach den vorhergehenden Ansprüche, wobei die gabelförmige Metallplatte (25) der vorderen Verbinder (29) über einen Schlitz am Transfersystem (28) angebracht ist.

3. Vorrichtung nach dem vorhergehenden Anspruch, wobei in der Ruhestellung die Scharnierplatte (35) und die Drehplatte (33) derart nebeneinander angeordnet sind, dass das ausziehbare obere Chassis (27) zwischen den Containern (6) bewegt werden kann.

4. Vorrichtung nach einem der vorhergehenden Ansprüche, wobei in der gedrehten Position die Drehplatte (33), auf der zwei Verbindungsstifte (32) angebracht sind, parallel zur Seitenwand des Containers (6) verbleibt und in dieser Position verriegelt ist, und/oder wobei die Arme des ausziehbaren oberen Chassis (27), die demselben Container zugeordnet sind, durch einen verstrebten Stahlarmrahmen (30) parallel zur Seitenwand der Container (6) blockiert sind, um den Gleichlauf ihrer Bewegung und das ordnungsgemäße seitliche Verschieben der Container (6) zu gewährleisten.

5. Vorrichtung nach einem der vorhergehenden Ansprüche, bei der die Arme des ausziehbaren oberen Chassis (27) über eine multidirektionale Gleitplattform (26) gleiten, die mit der Tragstruktur (46) durch eine multidirektionale Gleitstütze (48) verbunden ist, was eine multidirektionale Feineinstellung in der horizontalen Ebene des ausziehbaren oberen Chassis (27) relativ zur Gleitaufnahme (47) ermöglicht.

6. Vorrichtung nach dem vorhergehenden Anspruch, wobei die Gleitaufnahme (47) eine aufnehmende Andockplatte (49) aufweist.

7. Vorrichtung nach einem der vorhergehenden Ansprüche, bei der vorstehende Andockstifte (38) in der multidirektionalen Gleitplattform (26) für die korrekte Kopplung und Abstützung zwischen der Tragstruktur (46) und dem Gleitaufnehmer (47) angeordnet sind.

8. Vorrichtung nach dem vorhergehenden Anspruch, wobei in den Andockstiften (38) Laserführungssysteme zum automatischen Andocken der multidirektionalen Gleitplattform (26) relativ zur Gleitaufnahme (47) angeordnet sind.

9. Verfahren zur Verwendung der Vorrichtung nach den vorhergehenden Ansprüchen, **dadurch gekennzeichnet, dass** es die folgenden Schritte umfasst:
a) Die multidirektionalen Gleitstützen (48) bewegen die multidirektionale Gleitplattform (26), um die Position der Arme des ausziehbaren oberen Chassis (27) mit dem Gleitaufnehmer (47) einzustellen;
b) Die multidirektionale Gleitplattform (26) bewegt sich in der Querrichtung so, dass die vorstehenden Andockstifte (38) der multidirektionalen Gleitplattform (26) in die aufnehmenden Andockplatten (49) des Schienenfahrzeugs eingeführt werden;
c) Die Arme des ausziehbaren oberen Chassis (27) bewegen sich zur Gleitaufnahme (47), sodass sich das Transfersystem (28) und das Hebesystem (39) parallel zu den Schmalseiten der Container (6) befinden;
d) Der hintere Verbinder (34) dreht sich um 90°, sodass sich die Drehplatte (33) parallel zur Seite des Containers (6) befindet;
e) Das ausziehbare obere Chassis (27) fährt zurück, bis die Verbindungsstifte (32) der hinteren Verbinder (34) in die Ecklöcher der Rückseite des Containers (6) eingeführt sind;
f) Die vorderen Verbindungsheber (45) der vorderen Verbinder (29) werden betätigt, um die gabelförmige Metallplatte (25) aus der geneigten Position in die vertikale Position zu bewegen, wobei die Anschlussstifte (32) in die Ecklöcher der Vorderseite des Containers (6) eingeführt werden;
g) Die Hydraulikheber (44) des Hebesystems (39) werden über die Verbindungsstifte (32) der vorderen (29) und hinteren (34) Verbinder betätigt und halten den Container (6) in der Schwebe;
h) Das ausziehbare obere Chassis (27) fährt zurück und bewegt den Container (6) von der Gleitaufnahme (47) über die multidirektionale Gleitplattform (26);
i) Durch Schließen der Hydraulikheber (44) des Hebesystems (39) wird der Container (6) abgesenkt und die Zapfen (37) der multidirektionalen Schiebeplattform (26) eingeführt;
j) Die multidirektionale Gleitplattform (26) wird nach hinten bewegt, so dass die vorstehenden Andockstifte (38) von der aufnehmenden Andockplatte (49) der Gleitaufnahme (47) gelöst werden und der seitliche Gleitvorgang abgeschlossen ist.

## Revendications

1. Équipement pour transférer une charge entre un récepteur de glissement (47) et une structure de support (46) comprenant un châssis supérieur escamotable (27) comprenant :
- des moyens de levage de charge et de déplacement latéral, la charge étant un conteneur, les moyens de levage de charge consistant en un système de levage (39) comprenant des connecteurs avant (29) et des connecteurs arrière (34), tous deux comprenant des broches de connexion (32) destinées à être connectées aux coins d'un conteneur (6);
- les moyens de déplacement latéral consistant en un système de transfert (28); et
- un système laser pour l'identification de la position du châssis supérieur escamotable (27);
**caractérisée en ce que**:
- le système de transfert (28) comprend:
- une structure métallique à cadre rigide comprenant des cadres coulissants verticaux (40);
- des groupes de vérins hydrauliques (44) placés à l'intérieur de la structure métallique à cadre rigide, configurés pour soulever le système de levage (39); et
- des roues (41) utilisées comme moyens de glissement pour faire glisser le système de transfert (28) vers le récepteur de glissement (47) dans une direction transversale à la direction du conteneur (6);
- le système de levage (39):
- est un cadre en acier monté sur le cadre coulissant (40) et est configuré pour se déplacer verticalement le long du cadre coulissant (40) au moyen des groupes de vérins hydrauliques (44);
- les connecteurs arrière (34) sont montés avec un arbre vertical sur une plaque d'articulation (35) et comprennent une plaque de rotation (33) configurée pour tourner jusqu'à 90° horizontalement par rapport à la plaque d'articulation (35), permettant ainsi la connexion des connecteurs arrière (34) au conteneur (6) via les broches de connexion (32); et
- les connecteurs avant (29) comprennent une plaque métallique en forme de fourche (25) qui a deux connexions articulées à chaque extrémité, reliées au système de levage (39) et est configurée pour tourner d'une position inclinée vers l'extérieur à une position verticale au moyen des vérins de connexion (45), permettant ainsi la connexion au conteneur (6) via les broches de connexion (32).

2. Équipement selon les revendications précédentes, **caractérisée en ce que** la plaque métallique en forme de fourche (25) des connecteurs avant (29) est fixée au système de transfert (28) par une fente.

3. Équipement selon la revendication précédente, **caractérisée en ce que**, en position de repos, la plaque d'articulation (35) et la plaque de rotation (33) sont juxtaposées de telle sorte que le châssis supérieur escamotable (27) peut être déplacé entre les conteneurs (6) .

4. Équipement selon l'une quelconque des revendications précédentes, **caractérisée en ce que**, en position de rotation, la plaque de rotation (33), où sont placées deux broches de connexion (32), reste parallèle à la paroi latérale du conteneur (6) et est verrouillée dans cette position, et/ou dans lequel les bras du châssis supérieur escamotable (27) réservés au même conteneur sont bloqués par un cadre de bras en acier entretoisé (30) parallèle à la paroi latérale des conteneurs (6) pour garantir le synchronisme de leur mouvement et le glissement latéral correct des conteneurs (6).

5. Équipement selon l'une quelconque des revendications précédentes, **caractérisée en ce que** les bras du châssis supérieur escamotable (27) coulissent sur une plateforme coulissante multidirectionnelle (26) qui est reliée à la structure de support (46) par un support de coulissement multidirectionnel (48), pour un réglage multidirectionnel fin au niveau horizontal du châssis supérieur escamotable (27) par rapport au récepteur de glissement (47).

6. Équipement selon la revendication précédente, **caractérisée en ce que** le récepteur de glissement (47) comporte une plaque de fixation femelle (49).

7. Équipement selon l'une quelconque des revendications précédentes, **caractérisée en ce que** des broches de fixation mâles (38) sont disposées dans la plateforme coulissante multidirectionnelle (26) pour le couplage et le support corrects entre la structure de support (46) et le récepteur de glissement (47).

8. Équipement selon la revendication précédente, **caractérisée en ce que** les broches de fixation mâles (38) des systèmes de guidage laser sont disposées pour la fixation automatique de la plateforme coulissante multidirectionnelle (26) par rapport au récepteur de glissement (47).

9. Méthode d'utilisation de l'équipement revendiqué dans les revendications précédentes, **caractérisé en ce qu'**il comprend les étapes suivantes:
a) Les supports de coulissement multidirectionnels (48) déplacent la plateforme coulissante multidirectionnelle (26) afin d'ajuster la position des bras du châssis supérieur escamotable (27) avec le récepteur de glissement (47);
b) La plateforme coulissante multidirectionnelle (26) se déplace dans la direction transversale de manière à ce que les broches de fixation mâles (38) de la plateforme coulissante multidirectionnelle (26) soient insérées dans les plaques de fixation femelles (49) du wagon de chemin de fer;
c) Les bras du châssis supérieur escamotable (27) se dirigent vers le récepteur de glissement (47) laissant le système de transfert (28) et le système de levage (39) parallèles aux plus petits côtés des conteneurs (6);
d) Le connecteur arrière (34) tourne de 90° en laissant la plaque de rotation (33) parallèle au côté du conteneur (6);
e) Le châssis supérieur escamotable (27) recule jusqu'à ce que les broches de connexion (32) du connecteur arrière (34) soient insérées dans les trous d'angle de la face arrière du conteneur (6);
f) Les vérins de connexion avant (45) du connecteur avant (29) sont activés afin de déplacer la plaque métallique en forme de fourche (25) de la position inclinée à la position verticale, en insérant les broches de connexion (32) dans les trous d'angle de la face avant du conteneur (6);
g) Les vérins hydrauliques (44) du système de levage (39) sont actionnés en suspendant le conteneur (6) par les broches de connexion (32) des connecteurs avant (29) et du connecteur arrière (34);
h) Le châssis supérieur escamotable (27) recule en ramenant le conteneur (6) du récepteur de glissement (47) sur la plateforme coulissante multidirectionnelle (26);
i) En fermant les vérins hydrauliques (44) du système de levage (39), le conteneur (6) est abaissé en insérant les pointes (37) de la plateforme coulissante multidirectionnelle (26);
j) La plateforme coulissante multidirectionnelle (26) est déplacée vers l'arrière de manière à ce que les connecteurs de fixation mâles (38) soient libérés de la plaque de fixation femelle (49) du récepteur de glissement (47), ce qui termine le processus de glissement latéral.
